# EUROPEAN PATENT APPLICATION

(11) **EP 4 845 266 A1**
(43) Date of publication of application: **25.11.2026**
(21) Application number: 24918457.3
(22) Date of filing: 27.12.2024
(51) Int. Cl.: H04W 72/0453, H04W 72/0446, H04W 72/54, H04W 84/12

(54) **WIRELESS COMMUNICATION DEVICE, CONTROL METHOD, AND PROGRAM**

(30) Priority: 18.01.2024 JP 2024006209
(71) Applicant: Canon Kabushiki Kaisha, Tokyo 146-8501 (JP)
(72) Inventor: OUCHI, Masatomo, Tokyo 146-8501 (JP)
(74) Representative: Canon Europe Limited
(86) International application number: PCT/JP2024/046370
(87) International publication number: WO 2025/154547

(57) **Abstract**

A wireless communication apparatus complying with an IEEE 802.11 standard series, performs: determining whether a primary channel of a Basic Service Set (BSS) to which the wireless communication apparatus belongs is in a busy state; in a case where the determination means determines that the primary channel is in the busy state, transmitting, in not less than one channel different from the primary channel, an occupancy request frame that requests ensuring of a transmission opportunity (TXOP) in the channel; and executing predetermined communication, in which data is transmitted without using the primary channel, in accordance with a response to the occupancy request frame, wherein the occupancy request frame includes predetermined information possible to identify that ensuring of the TXOP for the predetermined communication is requested.

## Description

### TECHNICAL FIELD

The present invention relates to a wireless communication apparatus complying with the IEEE 802.11 standard, a control method, and a program.

### BACKGROUND ART

As a communication standard associated with wireless LAN (Wireless Local Area Network), the IEEE (Institute of Electrical and Electronics Engineers) 802.11 standard is known. In the IEEE 802.11be standard or the IEEE 802.11bn standard that is a successor standard thereof, reducing communication delays and increasing the channel use efficiency have been examined. PTL 1 describes a technique in which in a case where a primary channel (PCH) to be used to acquire a transmission opportunity cannot be used, communication is performed using another channel.

### CITATION LIST

### PATENT LITERATURE

PTL 1: U.S. Patent No. 11696353

### SUMMARY OF INVENTION

### TECHNICAL PROBLEM

To activate Non-Primary Channel (NPCH) communication that does not include the above-described primary channel, a notification to the reception side and a control signal for state confirmation are necessary. In the conventional IEEE 802.11 standard, if the control signal is detected not on the primary channel but on another channel, the reception side often interprets it as an error. On the other hand, if a new frame is defined, like PTL 1, time overhead may occur because it is necessary to transmit a frame for ensuring a transmission opportunity and a new frame. In addition, since it is necessary to confirm whether the partner-side wireless communication apparatus can interpret a new frame, transmission of an additional signal may occur.

As described above, convenience for executing communication including no primary channel is low.

### SOLUTION TO PROBLEM

In order to solve the above-described problem, according to the present invention, there is provided a wireless communication apparatus complying with an IEEE 802.11 standard series, comprising:
determination means for determining whether a primary channel of a Basic Service Set (BSS) to which the wireless communication apparatus belongs is in a busy state;
transmission means for, in a case where the determination means determines that the primary channel is in the busy state, transmitting, in not less than one channel different from the primary channel, an occupancy request frame that requests ensuring of a transmission opportunity (TXOP) on the channel; and
communication control means for executing predetermined communication, in which data is transmitted without using the primary channel, in accordance with a response to the occupancy request frame,
wherein the occupancy request frame includes predetermined information possible to identify that ensuring of the TXOP for the predetermined communication is requested.

### ADVANTAGEOUS EFFECTS OF INVENTION

According to the present invention, it is possible to improve convenience for executing communication including no primary channel.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing the configuration of a communication system according to the embodiment;
Fig. 2 is view showing the hardware configuration of a communication apparatus according to the embodiment;
Fig. 3 is view showing the software configuration of the communication apparatus according to the embodiment;
Fig. 4 is a view showing the relationship between a MAC layer and a PHY layer;
Fig. 5 is a view showing the arrangement of elements of a Beacon frame;
Fig. 6A is a view showing the configuration of an HT operation element;
Fig. 6B is a view showing the structure of an HT Operation Information;
Fig. 7A is a view showing the configuration of a VHT operation element;
Fig. 7B is a view showing the structure of a VHT Operation Information;
Fig. 8 is a view showing the configuration of an HE operation element;
Fig. 9 is a view showing the configuration of an EHT operation element;
Fig. 10 is a view showing the structure of a SERVICE field of a non-HT PPDU;
Fig. 11 is a view showing an example of setting of the value of TXVECTOR;
Fig. 12A is a view showing an example of setting of the value of RXVECTOR;
Fig. 12B is a view showing an example of setting of the value of RXVECTOR;
Fig. 13A is a view showing an example of setting of the value of TXVECTOR for NPCH communication;
Fig. 13B is a view showing an example of setting of the value of RXVECTOR for NPCH communication;
Fig. 14 is a sequence chart showing a first example;
Fig. 15 is a flowchart showing an example of processing executed by an AP according to the first example;
Fig. 16 is a flowchart showing an example of processing executed by a wireless communication apparatus on the transmission side according to the first example;
Fig. 17A is a flowchart showing an example of processing executed by a wireless communication apparatus (non-AP STA) on the reception side according to the first example;
Fig. 17B is a flowchart showing an example of processing executed by a wireless communication apparatus (non-AP STA) on the reception side according to the first example; and
Fig. 18 is a view showing the configuration of a non primary operation element.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <Explanation of Terms>

Primary channel (PCH): a 20-MHz channel that is required to be idle at the time of transmission in the standard up to the IEEE 802.11be standard.

Channel Wider: a concept introduced in the IEEE 802.11n standard when a 40-MHz Bandwidth is obtained by bonding a channel adjacent to the 20-MHz channel. In this case, the original 20-MHz channel is sometimes expressed as P20 (Primary 20), and the bonded channel as S20 (Secondary 20). Note that Bandwidth is sometimes expressed as Channel Width.

Badnwidth Signaling: a bandwidth negotiation procedure introduced in the 802.11ac standard. In the IEEE 802.11be standard, bandwidths up to 320 MHz are usable.

Non-primary channel (NPCH) communication: communication that is executed even if the PCH is busy (not idle). In the NPCH communication, no band is ensured in the PCH.

SPCH (Secondary Primary Channel): a 20-MHz channel replacing the PCH in NPCH communication.

### <Configuration of Communication System>

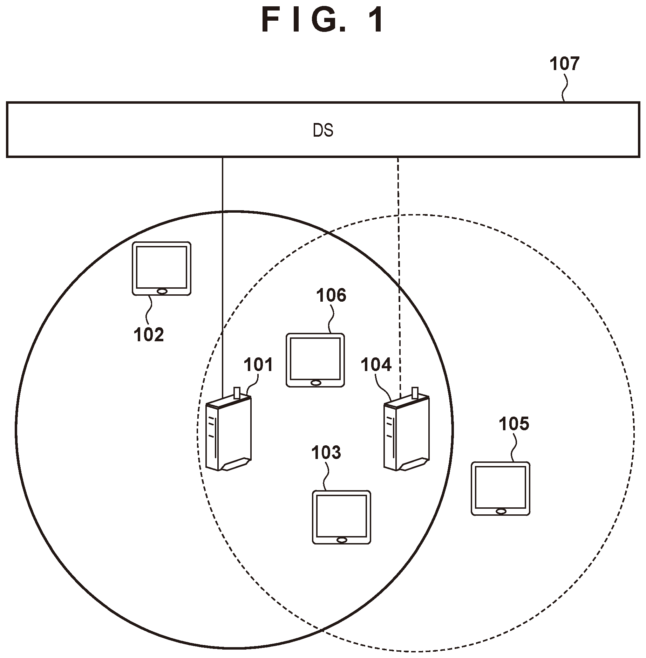

The configuration of a wireless communication system 1 according to this embodiment will be described with reference to Fig. 1.

The wireless communication system 1 includes access points (APs) 101 and 104 (to be referred to as AP hereinafter without distinction), terminals (STAs) 102, 103, 105, and 106 (to be referred to as STA hereinafter without distinction), and a distributed system (DS) 107.

The APs 101 and 104 are wireless communication apparatuses configured to communicate with terminals (STAs) that can be located in areas indicated by circles in Fig. 1. In Fig. 1, a solid circle indicates a range (service area) in which communication with the AP 101 is possible, and a dotted circle indicates a range in which communication with the AP 104 is possible. Note that in the example shown in Fig. 1, the STAs 102, 103, and 106 exist in the service area of the AP 101, and the STAs 103, 105, and 106 exist in the service area of the AP 104, but the number of STAs is not limited. The APs 101 and 104 each manage a Basic Service Set (BSS), and the BSS managed by the AP 104 is an Overlapping Basic Service Set (OBSS) for the AP 101.

The STAs 102, 103, 105, and 106 are wireless communication apparatuses each of which is connected to an AP to perform communication. An STA is also called a non access point terminal (non AP STA). In this embodiment, a description will be made assuming that the STAs 102 and 103 are connected to the AP 101, and the STAs 105 and 106 are connected to the AP 104. Note that in this embodiment, the STA 102 and the AP 104 are in a hidden terminal state. The AP 101 and the STAs 102 and 103 can execute data communication by exchanging wireless frames complying with the IEEE 802.11bn standard that is a successor standard of the IEEE 802.11be standard having a target maximum transmission speed of 46.08 Gbps. Also, the AP 104 and the STAs 105 and 106 can execute data communication by exchanging wireless frames complying with the IEEE 802.11bn standard. The main features of the IEEE 802.11bn standard that is the successor standard of the IEEE 802.11be are high-reliable communication, low-latency communication, and improvement of throughput in a congestion state. A wireless frame communicated in the successor standard will also be referred to as a UHR (Ultra High Reliability) PPDU. PPDU is short for Physical Layer Protocol Data Unit. Note that the name UHR is a name set for the sake of convenience in consideration of the object to be achieved in the successor standard or the main feature of the standard, and may be a different name when formulation of the standard is completed. Similarly, the name IEEE 802.11bn may also be a different name when formulation of the standard is completed. On the other hand, note that this specification and appended claims are substantially applicable to all successor standards that are the successor standards of the 802.11be standard. Each apparatus is assumed to support communication (transmission/reception) of a UHR PPDU and is also configured to support communication of a PPDU of legacy standards that are standards before the UHR standard. More specifically, the AP 101 and the STA 102 are configured to support transmission/reception of a PPDU of the IEEE 802.11a/b/g/n/ac/ax/be standards. Also, in this embodiment, a PPDU corresponding to a standard before the IEEE 802.11n standard (High Throughput standard) will be referred to as non-HT PPDU.

The DS 107 is a network apparatus that provides a distributed system access function (DSAF) to the APs 101 and 104 and can be connected not only to the BSSs managed by the APs 101 and 104 but also to other BSSs or an external network. This access function may be wired communication such as Ethernet^{®} or a telephone network. Alternatively, this access function is wireless communication such as LTE (Long-Term Evolution) or WiMAX (Worldwide Interoperability for Microwave Access). Furthermore, it may be wireless LAN complying with the IEEE 802.11 standard. In this case, a wireless channel used in communication between the DS 107 and an AP may be the same as a wireless channel used in communication between an AP and an STA or may be different.

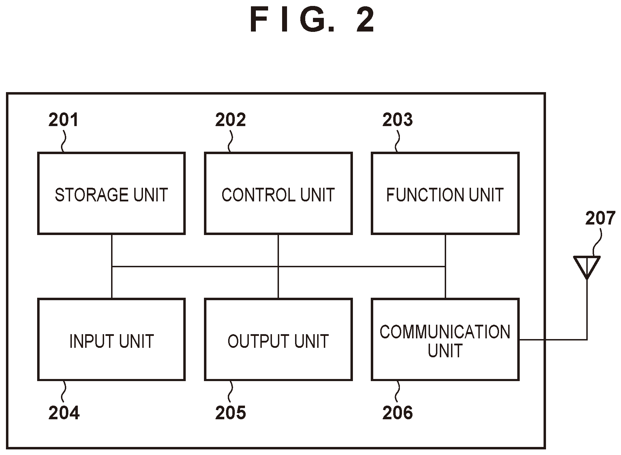

Fig. 2 shows a hardware configuration applicable to the wireless communication apparatus including an AP and an STA according to this embodiment. The wireless communication apparatus includes, as an example of the hardware configuration, a storage unit 201, a control unit 202, a function unit 203, an input unit 204, an output unit 205, a communication unit 206, and an antenna 207.

The storage unit 201 is formed by a memory such as a read only memory (ROM) or a random access memory (RAM) and stores programs configured to perform various kinds of operations to be described later and various kinds of information such as communication parameters for wireless communication. Note that in place of or in addition to the memory such as a ROM or a RAM, a storage medium such as a flexible disk, a hard disk, an optical disk, a magnetooptical disk, a CD-ROM, a CD-R, a magnetic tape, a nonvolatile memory card, or a DVD may be used for the storage unit 201. Also, the storage unit 201 may include the above-described plurality of memories.

The control unit 202 is formed by, for example, a processor such as a central processing unit (CPU) or a micro processing unit (MPU), an ASIC (Application-Specific Integrated Circuit), a DSP (Digital Signal Processor), an FPGA (Field Programmable Gate Array), or the like. The control unit 202 controls the operation of an entire AP by executing programs stored in the storage unit 201. Note that the control unit 202 may control the operation of the entire AP by cooperation of programs and an OS (Operating System) stored in the storage unit 201. In addition, the control unit 202 may include a plurality of processors such as a multi-core processor and control the operation of the entire AP.

In addition, the control unit 202 controls the function unit 203 to execute the AP function or STA function of the function unit 203 or predetermined processing such as image capturing, printing, or projection.

The function unit 203 is hardware used by the AP or the STA to execute predetermined processing. In an example, the function unit 203 can have functions such as an AP function, an STA function, an image capturing function, a printing function, and a projection function. If the wireless communication apparatus has at least one of the image capturing function, the printing function, and the projection function, the wireless communication apparatus may be a multi function printer or a projector.

The input unit 204 includes an input interface configured to accept various kinds of operations from the user. The output unit 205 includes an output interface configured to perform various kinds of outputs to the user. Here, the output by the output unit 205 includes at least one of display on a screen, audio output by a speaker, and vibration output. Note that the functions of both the input unit 204 and the output unit 205 may be implemented by one module, like a touch panel.

The communication unit 206 controls wireless communication complying with the IEEE 802.11 series, controls wireless communication complying with Wi-Fi^{®}, or controls IP (Internet Protocol) communication. Furthermore, the communication unit 206 performs transmission/reception of a wireless signal for wireless communication by controlling the antenna 207. That is, the communication unit 206 performs transmission/reception of a wireless frame such as the above-described UHR PPDU in cooperation with the antenna 207.

In Fig. 2, the antenna 207 includes one antenna for the sake of simplicity, but the antenna 207 may include a plurality of antennas. In general, the antenna 207 includes antennas in number according to the number of spatial streams. Note that the communication unit 206 and the antenna 207 each include radio frequency (RF) chains in number according to corresponding frequency bands (2.4 GHz band, 5 GHz band, and 6 GHz band) and the number of corresponding streams.

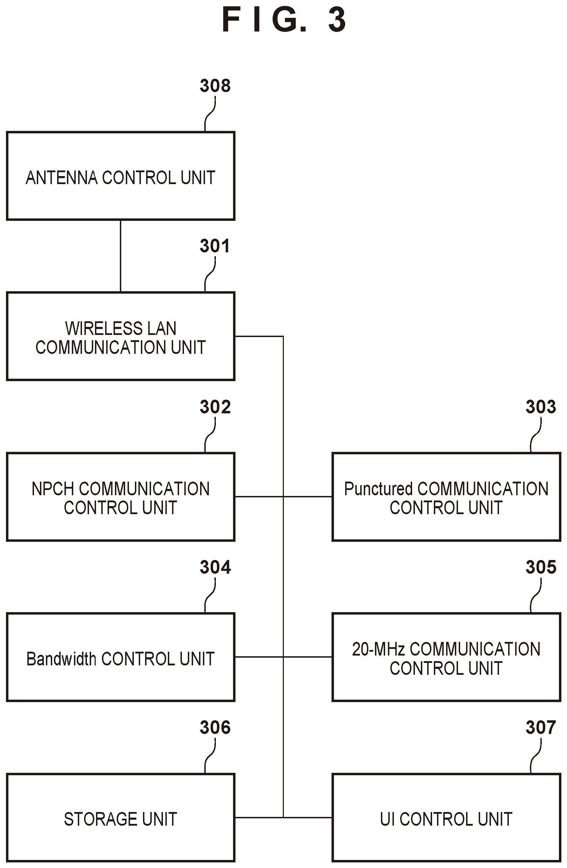

Fig. 3 shows the software configuration of the wireless communication apparatus. As an example, the wireless communication apparatus includes a wireless LAN control unit 301, an NPCH communication control unit 302, a Punctured communication control unit 303, a Bandwidth control unit 304, a 20-MHz communication control unit 305, and a storage unit 306. The wireless communication apparatus also includes a user interface (UI) control unit 307 and an antenna control unit 308.

The wireless LAN control unit 301 is configured to include circuits configured to perform transmission/reception of a wireless signal to/from another wireless LAN apparatus (for example, another AP or STA) and a program for controlling these. By the wireless LAN control unit 301, the wireless communication apparatus executes communication control of a wireless LAN such as frame generation, frame transmission, or reception of a wireless frame from another wireless communication apparatus in accordance with the IEEE 802.11 standard series.

In a case where the PCH is busy, the NPCH communication control unit 302 attempts to control communication in the NPCH.

The Punctured communication control unit 303 executes communication in a configuration in which a signal including a preamble does not exist on a 20-MHz channel adjacent to a certain bandwidth.

The Bandwidth control unit 304 executes communication by bonding 20-MHz channels. The 20-MHz communication control unit 305 executes NPCH communication in a case where the bandwidth used for communication is 20 MHz.

The storage unit 306 is configured to include a storage device such as a ROM or a RAM for storing programs to be executed by an AP and various kinds of data.

The UI control unit 307 is configured to include hardware associated with user interfaces (UIs) such as a touch panel and buttons for accepting an operation to the wireless communication apparatus by the user and a program configured to control these. Note that the UI control unit 307 can also have functions for presenting information to the user, for example, display of an image or the like and audio output. The antenna control unit 308 controls an antenna function.

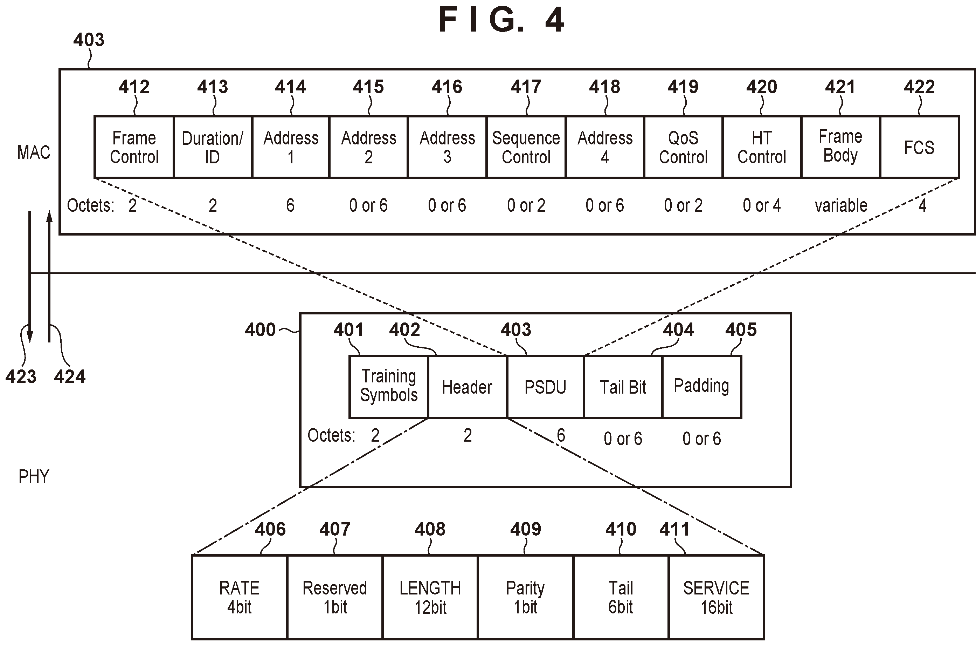

Fig. 4 shows the relationship between a MAC layer and a PHY layer, which form a physical layer protocol data unit (PPDU) that is a frame complying with the IEEE 802.11 standard.

Training Symbols 401 is a 2-octet field that is a training symbol. Here, octet indicates a data size, like byte, and 1 octet equals 8 bits. Header 402 is a 2-octet field that is a physical layer (PHY) header. Details will be described later with reference to fields 406 to 411. A physical service data unit (PSDU) 403 indicates the data unit of a service that the PHY provides to the upper layer (MAC layer) and is a 6-octet field.

Tail Bit 404 is a 0- or 6-octet field indicating the tail bit of a PDU. A Padding 405 is the padding of a PPDU and is a 0- or 6-octet field.

RATE 406 is a 4-bit field that stores data indicating a frame transmission speed. Reserved 407 is a reserved region (1-bit length). LENGTH 408 is a 12-bit field indicating a frame length. Parity 409 is a 1-bit field indicating a code calculated/added to detect an error that occurs at the time of frame transmission. Tail 410 is a 6-bit field that is the tail bit of a PHY header. Service 411 is a 12-bit service field.

The structure of a MAC frame stored in the PSDU 403 will be described next. Frame Control 412 is a 2-octet frame control field that includes 10 Subfields and indicates a type such as Management/Control/Data and the transmission direction.

Duration 413 is a field having a length of 2 octets and indicates the length of a predetermined period. For example, the Duration 413 indicates a frame length or the length of the period of transmission opportunity (TXOP) requested to be ensured by a frame. The most significant bit (MSB: B15) of the Duration 413 is set to "1", and a time length from 0 to 32,767 µsec is indicated by remaining 15 bits.

Address 1 to 4 (414, 415, 416, and 418) are each a 6-octet field used to set a BSS identifier (BSSID) or the address of a transmission source terminal, a destination terminal, or the like by the type of the MAC frame. Depending on the frame type, Address 2 to 4 are not included in the frame. In the following explanation, Address 1 414, Address 2 415, Address 3 416, and Address 4 418 are sometimes referred to as Address fields without distinction.

Sequence Control 417 is a 2-octet field used for sequence control. Depending on the frame type, the Sequence Control 417 is not included in the frame.

QoS Control 419 is a 0- or 2-octet field used to perform QoS Control of a data frame. A buffer status report (BSR) of a standard before IEEE 802.11ax is stored in the QoS Control 419.

HT Control (HTC) 420 is a 0- or 4-octet field including control information associated with high throughput HT or very high throughput (VHT).

Frame Body 421 is a field of a variable length, which stores various information elements (IE) in a case where the type of the Frame Control 412 indicates Management frame, that is, a beacon or a probe request/response.

A frame check sequence (FCS) 422 is a 4-octet field that stores a value used to check whether the MAC header or the data portion includes no error.

TXVECTOR 423 and RXVECTOR 424 indicate how to transmit a MAC frame between the MAC layer and the PHY layer in the IEEE 802.11 standard. For example, the MAC layer indicates to the PHY layer how a MAC frame is transmitted, by using a parameter (TXVECTOR parameter). To the contrary, the PHY layer indicates to the MAC layer how the PHY layer receives a MAC frame, by using a parameter (RXVECTOR parameter). An example of the parameter is CH_BANDWIDTH indicating the bandwidth.

Note that the format of the PHY layer shown in Fig. 4 changes depending on the standard, and the format of a non High Throughput (HT) PPDU is shown here. The term "non-HT" indicates that it is a format before the IEEE 802.11n standard (High Throughput standard). The non-HT format is used in the control frame of Request To Send (RTS) that is an occupancy request frame for requesting to ensure transmission opportunity or Clear To Send (CTS) that is an occupancy response frame to the occupancy request frame. Also, in a case of a non-HT PPDU, the QoS Control 419 and the HT Control 420 of the MAC layer do not exist in the MAC frame.

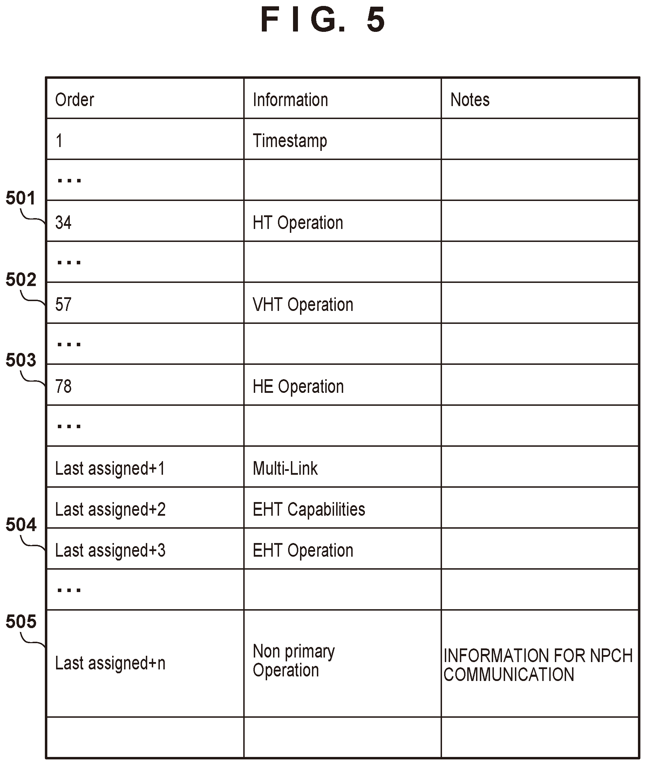

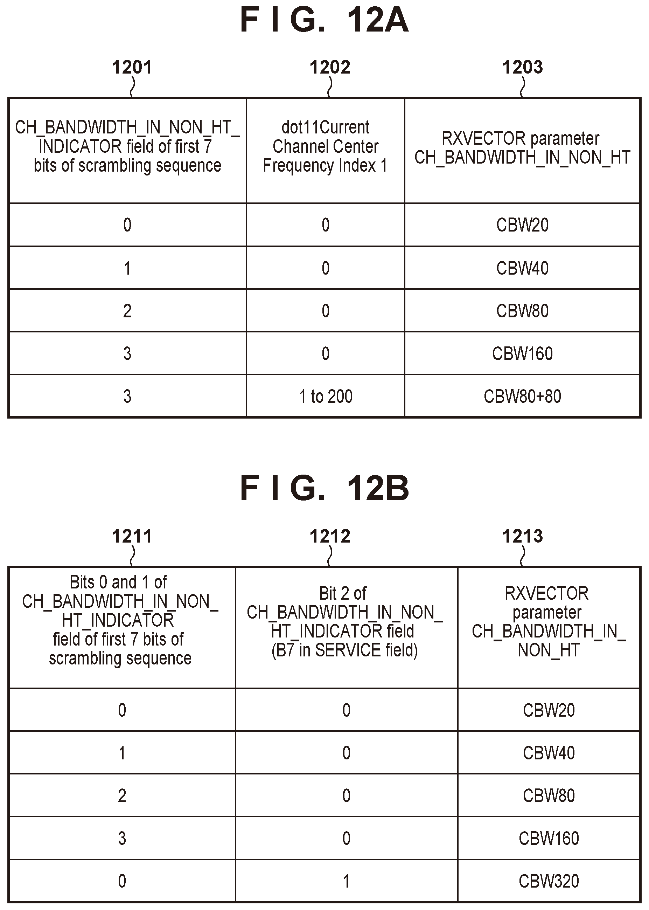

Notifications of PCH and Bandwidth will be described with reference to Figs. 5 to Figs. 12A and 12B. These are shown in a Basic Service Set (BSS) by the operation elements of the management frame of IEEE 802.11.

Fig. 5 shows the arrangement of elements of a Beacon frame. An element is also called an information element (IE). Order indicates the order in the Frame body of Beacon, and Information indicates the name of an information element. Of these elements, information about an operation channel is distributed to several Operation elements along with evolution of the IEEE 802.11 standard.

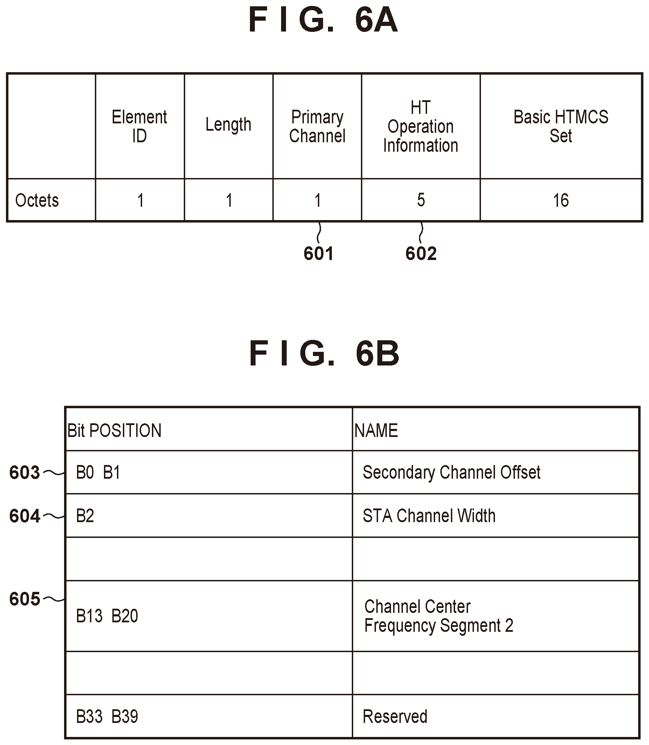

Figs. 6A and 6B show the configuration of an HT Operation element complying with the IEEE 802.11n standard.

Primary Channel 601 is a 1-octet field and indicates the channel number of a primary channel. HT Operation Information 602 is a 5-octet field. Secondary channel offset 603 is a 2-bit field indicating the frequency relative position of a Secondary channel with respect to the primary channel or the presence/absence of a Secondary channel. STA Channel Width 604 is a 1-bit field indicating whether the bandwidth of the transmission PPDU is 20 MHz.

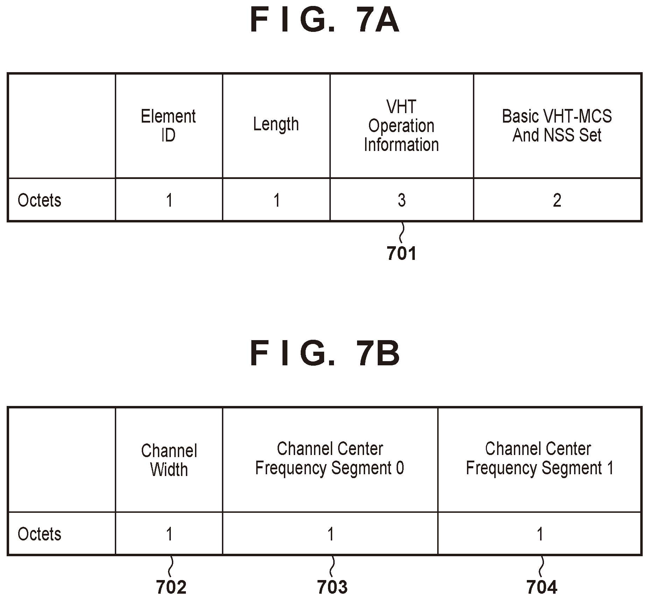

Figs. 7A and 7B show the configuration of a Very High Throughput (VHT) Operational element of the IEEE 802.11ac standard. Fig. 7B is a view showing the configuration of a VHT Operation Information field shown in Fig. 7A.

VHT Operation Information 701 is a 3-octet field that is information about the channel.

Channel Width 702 is a 1-octet field indicating whether the bandwidth is 20 or 40 MHz, 80 MHz or 160 MHz or 80+80 MHz, 160 MHz, or 80+80 MHz. Channel Center Frequency Segment 0 703 and the Channel Center Frequency Segment 1 704 are each a 1-octet field indicating the center frequency of a channel.

In the IEEE 802.11ac standard, a transmission operation of the 160-MHz band can be performed by putting together two non-continuous 80-MHz bands. Hence, the center frequency of a band not more than 80 MHz and 160 MHz or 80+80 MHz is indicated by the values of the Channel Center Frequency Segments 703 and 704.

Note that in the IEEE 802.11ac standard, signaling of a Bandwidth using RTS is introduced. This is a procedure of putting the information of a bandwidth in the RTS of the non-HT PPDU format and using the TA (Transmitter Address, that is, Address 2 415) as a group address. Here, the information of the bandwidth is indicated by bits corresponding to CH_BANDWIDTH_IN_NON_HT and DYN_BANDWIDTH_IN_NOT_HT of the SERVICE field of the PHY header. Also, the group address is an address obtained by setting the Individual/Group bit in the MAC address structure to "1".

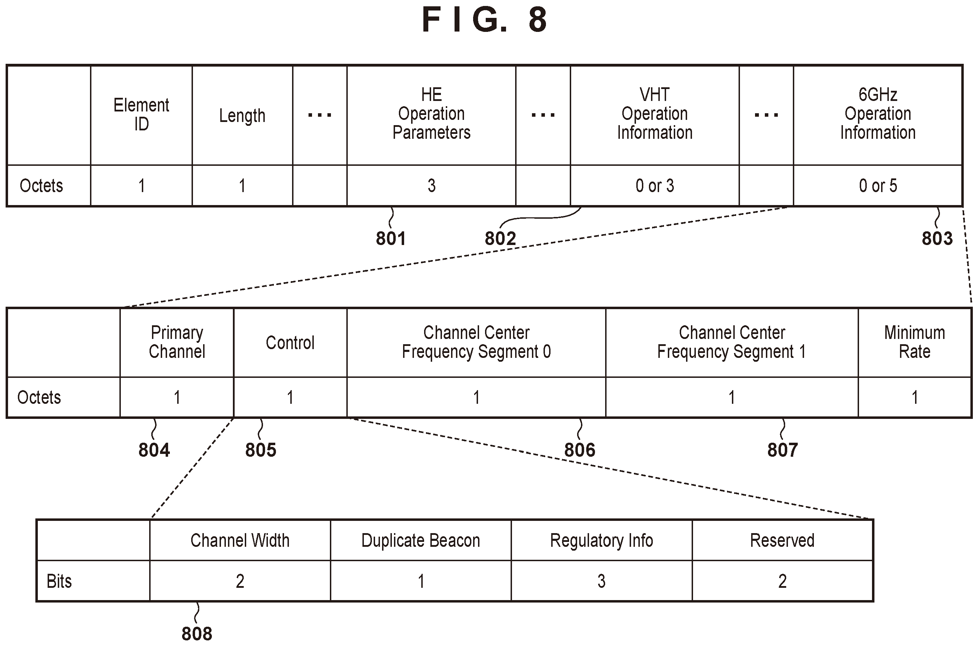

Fig. 8 shows a High Efficiency (HE) Operation element of the IEEE 802.11ax standard.

HE Operation Parameters 801 is a 3-octet field that stores the parameters of an HE operation. VHT Operation Information 802 is a 0- or 3-octet field that stores the parameters of a VHT operation. 6-GHz Operation Information 803 is a 0- or 5-octet field that stores information indicating the channel information of the 6-GHz band usable from the IEEE 802.11ax onwards.

The presence/absence of the VHT Operation Information 802 and the 6-GHz Operation Information 803 is indicated by corresponding field (1 bit) of the HE Operation Parameters 801.

Primary Channel 804 is a 1-octet field indicating the primary channel of the 6-GHz band.

Control 805 is a 1-octet field including Channel Width 808, Duplicate Beacon 809, and Regulatory Info 810 to be described later.

Channel Center Frequency Segments 0 806 and 1 807 are each a 1-octet field that stores information indicating the center frequency of the channel, like a field existing in the VHT Operation.

The Channel Width 808 is a 2-bit field indicating which one of 20/40/80/160 MHz the channel width is. The Duplicate Beacon 809 is a 1-bit field indicating whether a beacon frame of the same BSSID is to be transmitted using a different channel. The Regulatory Info 810 is a 3-bit field indicating a regulation or limitation concerning the specifications of wireless communication in a specific region.

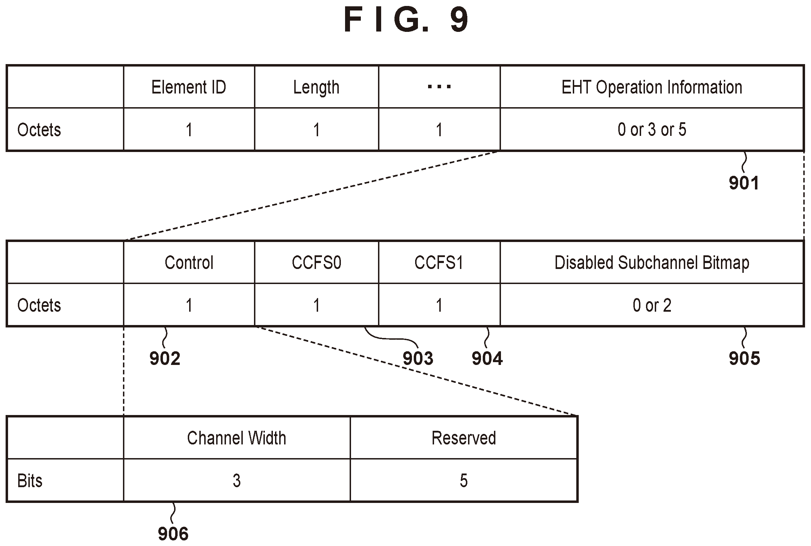

Fig. 9 shows the configuration of an EHT Operation element of the IEEE 802.11be standard (Draft4.1).

EHT Operation Information 901 is a 0-, 3-, or 5-octet field that stores Control 902, CCFS0 903, CCFS1 904, and Disabled Subchannel Bitmap 905.

The Control 902 is a 1-octet control field that stores Channel Width 906 to be described later.

The CCFS0 903 is a 1-octet field indicating the center frequency in a case where the bandwidth is 80 MHz or less. If the bandwidth is 160 MHz, the CCFS0 903 indicates the center frequency of a primary channel of 80 MHz. If the bandwidth is 320 MHz, the CCFS0 903 indicates the center frequency of a primary channel of 160 MHz. The CCFS1 904 indicates the center frequency of a Secondary channel in a case where the bandwidth is 160 or 320 MHz.

The Disabled Subchannel Bitmap 905 is a 2-octet field indicating, by each of 16 bits, a 20-MHz channel that is not used (set in a Punctured state) in the bandwidth up to 320 MHz.

The Channel Width 906 is a 3-bit field indicating, by 3 bits, which one of 20/40/80/160/320 MHz the channel width is.

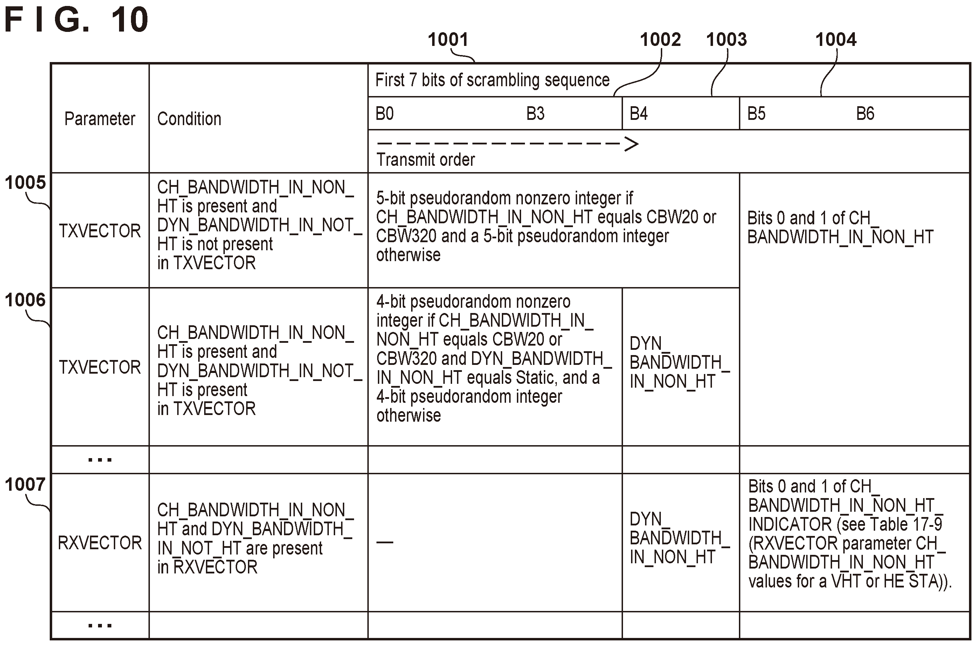

Fig. 10 shows a SERVICE field of a non-HT PPDU and parameters of TXVECTOR/RXVECTOR, particularly, the relationship between CH_BANDWIDTH_IN_NON_HT and DYN_BANDWIDTH_IN_NON_HT.

A column 1001 indicates first 7 bits of the SERVICE 411 of a non-HT PPDU. Of the first 7 bits of the SERVICE 411, a column 1002 indicates 4 bits from bit 0 (B0) to bit 3 (B3), a column 1003 indicates bit 4 (B4), and a column 1004 indicates 2 bits from bit 5 (B5) to bit 6 (B6).

A row 1005 indicates a 7-bit configuration in TXVECTOR, that is, transmission from the MAC layer to the PHY layer in a case where CH_BANDWIDTH_IN_NON_HT exists and DYN_BANDWIDTH_IN_NON_HT does not exist.

A row 1006 indicates a 7-bit configuration in TXVECTOR in a case where CH_BANDWIDTH_IN_NON_HT and DYN_BANDWIDTH_IN_NON_HT exist.

A row 1007 indicates a 7-bit configuration in RXVECTOR in a case where CH_BANDWIDTH_IN_NON_HT and DYN_BANDWIDTH_IN_NON_HT exist.

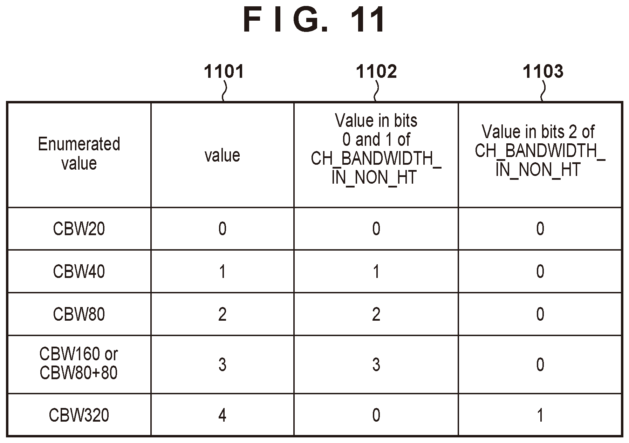

Fig. 11 is a view showing the relationship between 3 bit values of CH_BANDWIDTH_IN_NON_HT of TXVECTOR and the channel bandwidth (CBW). If the value of CH_BANDWIDTH_IN_NON_HT is 1, it indicates 40 MHz (CBW40), a value "2" indicates 80 MHz (CBW80), a value "3" indicates 160 MHz (CBW160 or CBW80+80), and a value "4" indicates 320 MHz (CBW320).

Figs. 12A and 12B show the relationship between CH_BANDWIDTH_IN_NON_HT and CH_BANDWIDTH_IN_NON_HT_INDICATOR of RXVECTOR. Fig. 12A shows the value of CH_BANDWIDTH_IN_NON_HT with respect to a VHT (802.11ac) STA or an HE (802.11ax) STA. Fig. 12B shows the value of CH_BANDWIDTH_IN_NON_HT with respect to an EHT (802.11be) STA.

A column 1201 in Fig. 12A indicates the value of the CH_BANDWIDTH_IN_NON_HT_INDICATOR field of first 7 bits of a scrambling sequence. A column 1202 indicates the value of dot11Current ChannelCenterFrequencyIndex1. A column 1203 indicates the value of CH_BANDWIDTH_IN_NON_HT associated with the value of the column 1201 and the value of the column 1202.

As shown in Fig. 12A, if the value of CH_BANDWIDTH_IN_NON_HT_INDICATOR is 0, it indicates 20 MHz (CBW20), a value "1" indicates 40 MHz (CBW40), and a value "2" indicates 80 MHz (CBW80). In a case where the value of CH_BANDWIDTH_IN_NON_HT_INDICATOR is 3, if the value of dot11CurrentChannelCenterFrequencyIndex1 is 0, it indicates 160 MHz (CBW160). In a case where the value of CH_BANDWIDTH_IN_NON_HT_INDICATOR is 3, if the value of dot11CurrentChannelCenterFrequencyIndex1 is not 0, it indicates 80 MHz + 80 MHz (CBW80+80).

A column 1211 in Fig. 12B indicates the values of bit 0 and bit 1 of the CH_BANDWIDTH_IN_NON_HT_INDICATOR field of first 7 bits of the scrambling sequence. A column 1212 indicates the value of bit 2 of the CH_BANDWIDTH_IN_NON_HT_INDICATOR field. A column 1213 indicates the value of CH_BANDWIDTH_IN_NON_HT associated with the value of the column 1211 and the value of the column 1212.

As shown in Fig. 12B, if the value of bits 0 and 1 of CH_BANDWIDTH_IN_NON_HT_INDICATOR is 1, it indicates 40 MHz (CBW40). If the value of bits 0 and 1 of CH_BANDWIDTH_IN_NON_HT_INDICATOR is 2, it indicates 80 MHz (CBW80), and a value "3" indicates 160 MHz (CBW160). If the value of bits 0 and 1 of CH_BANDWIDTH_IN_NON_HT_INDICATOR is 0 and the value of bit 2 is 0, CH_BANDWIDTH_IN_NON_HT indicates 20 MHz (CBW20). If the values of bit 0 and 1 of CH_BANDWIDTH_IN_NON_HT_INDICATOR are 0 and the value of bit 2 is 1, CH_BANDWIDTH_IN_NON_HT indicates 320 MHz (CBW320).

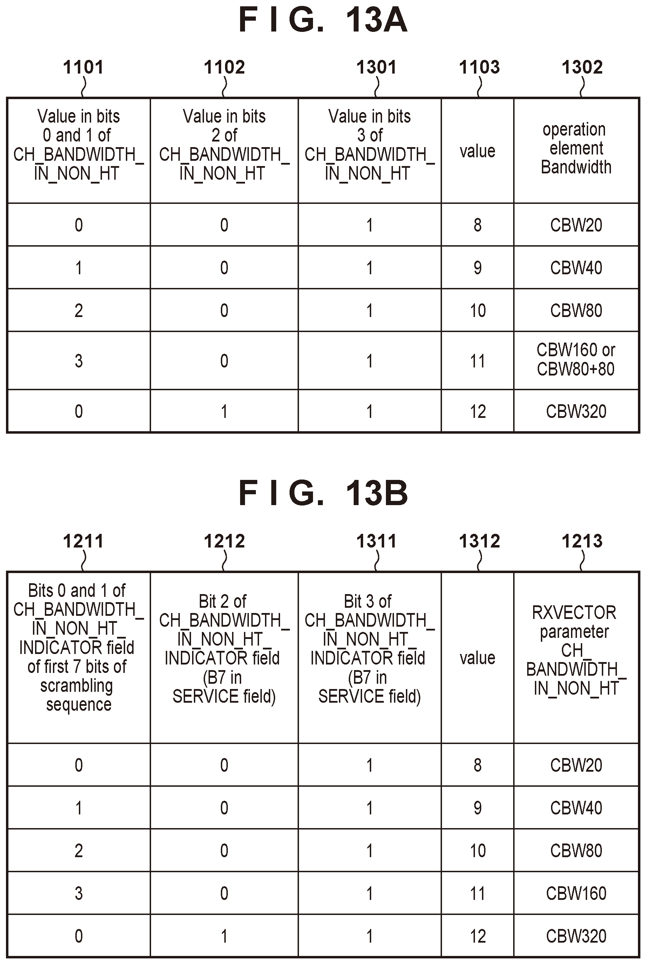

Fig. 13A is a table showing the relationship between 4 bit values of CH_BANDWIDTH_IN_NON_HT of TXVECTOR for NPCH communication and CBW (Channel Bandwidth). Columns 1101 to 1103 are the same as the columns 1101 to 1103 described with reference to Fig. 11, and a description thereof will be omitted.

A column 1301 indicates bit 3 of CH_BANDWIDTH_IN_NON_HT_INDICATOR, and this is a bit set to "1" in NPCH communication. That is, in NPCH communication, a meaning is imparted to bit 3 that is set to "0" and unused in PCH communication, as shown in Fig. 11. That is, bit 3 of CH_BANDWIDTH_IN_NON_HT_INDICATOR is handled as information possible to identify that the frame is RTS for NPCH communication. However, a column 1302 indicates the value of CH_BANDWIDTH_IN_NON_HT.

In the example shown in Fig. 13A, if the value of 4 bits of CH_BANDWIDTH_IN_NON_HT is 8, it indicates that the bandwidth is 20 MHz (CBW20), and if the value is 9, it indicates that the bandwidth is 40 MHz (CBW40). Also, if the value is 10, it indicates that the bandwidth is 80 MHz (CBW80), if the value is 11, it indicates that the bandwidth indicates 160 MHz or 80+80 MHz (CBW160 or CBW80+80), and if the value is 12, the bandwidth is 320 MHz (CBW320).

Fig. 13B is a table showing the relationship between 4 bit values of CH_BANDWIDTH_IN_NON_HT of RXVECTOR for NPCH communication and CBW (Channel Bandwidth). Columns 1211 to 1213 are the same as the columns 1211 to 1213 described with reference to Fig. 12B, and a description thereof will be omitted.

A column 1311 indicates bit 3 of CH_BANDWIDTH_IN_NON_HT_INDICATOR, and this is a bit set to "1" in NPCH communication. That is, in NPCH communication, a meaning is imparted to bit 3 that is set to "0" and unused in PCH communication, like the column 1301.

In the example shown in Fig. 13B, if the value of 4 bits of CH_BANDWIDTH_IN_NON_HT is 8, the bandwidth indicates 20 MHz (CBW20), and if the value is 9, the bandwidth indicates 40 MHz (CBW40). Also, if the value is 10, the bandwidth indicates 80 MHz (CBW80), if the value is 11, the bandwidth indicates 160 MHz (CBW160), and if the value is 12, the bandwidth indicates 320 MHz (CBW320).

### <Example 1>

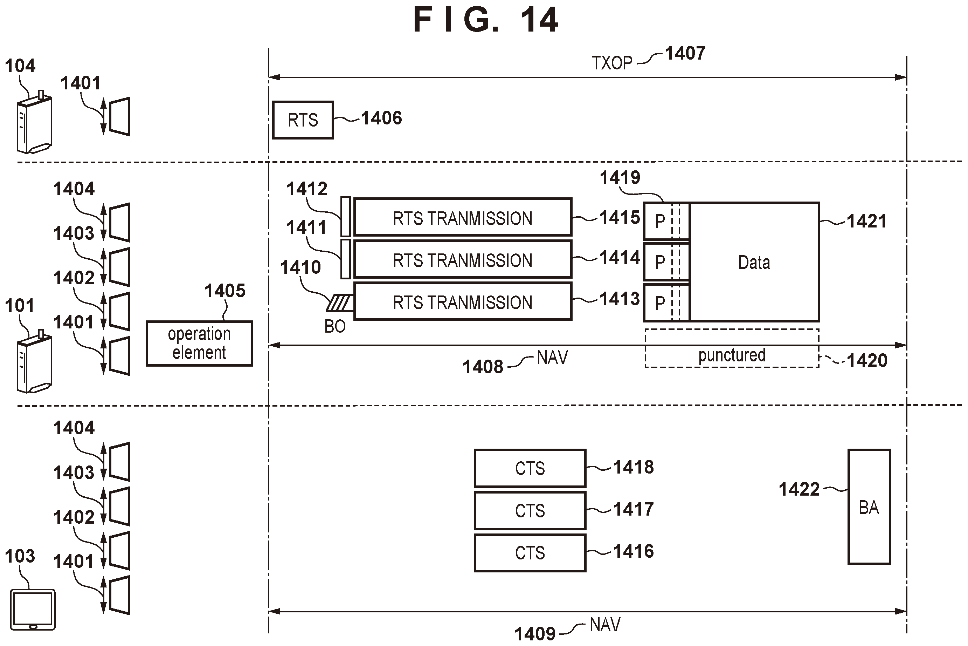

Fig. 14 shows an operation sequence chart of a first example according to this embodiment. Fig. 14 shows an operation in a case where in the configuration shown in Fig. 1, when performing transmission from the AP 101 to the STA 103, the AP 104 in the OBSS transmits an RTS to the STA 105 and operates as a TXOP holder.

Each of channels 1401 to 1404 schematically expresses a 20-MHz channel.

The AP 101 broadcasts an Operation element 1405 including use channel information of the BSS in advance. In this example, the primary channel is the channel 1401, Bandwidth is 80 MHz, and the channels 1401 to 1404 are used.

Next, the AP 104 transmits an RTS 1406 to the STA 105. A TXOP period 1407 is thus ensured. In general, the length of the TXOP period 1407 corresponds to time designated in the Duration field of the RTS 1406.

The AP 101 sets an NAV (Network Allocation Vector) 1408 by detecting the RTS 1406 transmitted from the AP 104. The NAV is also called a transmission inhibition period, and transmission on the channel 1401 is inhibited during time designated in the Duration field of the RTS 1406. The STA 103 can also detect the RTS 1406 transmitted from the AP 104 and therefore sets an NAV 1409 on the channel 1401, like the AP 101. If the reception side of the AP 101 is the STA 102, in the terminal arrangement shown in Fig. 1, the STA 102 does not detect the signal from the AP 104, that is, the STA 102 and the AP 104 hold a hidden terminal relationship. For this reason, the STA 102 does not set the NAV.

As for transmission/reception of frames from the RTS 1406 onward in the OBSS, that is, frames from CTS onward to be transmitted from the STA 105 that is the TXOP responder to the AP 104, a description will be omitted.

Next to the setting of the NAV, the AP 101 decides to execute NPCH communication, selects one channel except PCH from the 80-MHz band, and starts backoff (BO) counter control 1410. Here, the BO counter control 1410 is performed on the channel 1402, but another channel 1403 or 1404 may be used.

The idle state of the channel 1402 continues, and in priority interframe spaces (PIFS) 1411 and 1412 before the counter of the BO counter control 1410 becomes zero, the channels 1403 and 1404 are idle. In this case, the AP 101 transmits RTSs 1413 to 1415 for NPCH communication using the channels 1402 to 1404, respectively.

The STA 103 that has received the RTSs 1413 to 1415 from the AP 101 confirms the idle state of each channel and then transmits CTSs 1416 to 1418 to the AP 101. In this example, it is determined that the three channels are idle. However, it may sometimes be determined that one of the channels is busy. In this case, no CTS is transmitted on the channel in the busy state.

The AP 101 decides Punctured Channel Informaiton 1419 of the preamble in accordance with the channel on which the CTS is received. Thus, the PHY header of the PPDU of 80 MHz indicates that the channel 1401 is in a punctured state 1420. Note that if a CTS corresponding to one of the channels 1402 to 1404 is not returned, the channel on which no CTS is transmitted is also set in the punctured state. Next to the preamble, the AP 101 transmits a PSDU 1421 of the PPDU.

The STA 103 that has received the PSDU 1421 transmits BlockAck (BA) 1422 to the AP 101 if the data can normally be decoded.

As described above, even if the PCH is in the busy state, the AP 101 can transmit data to the STA in the BSS using the NPCH without using the PCH.

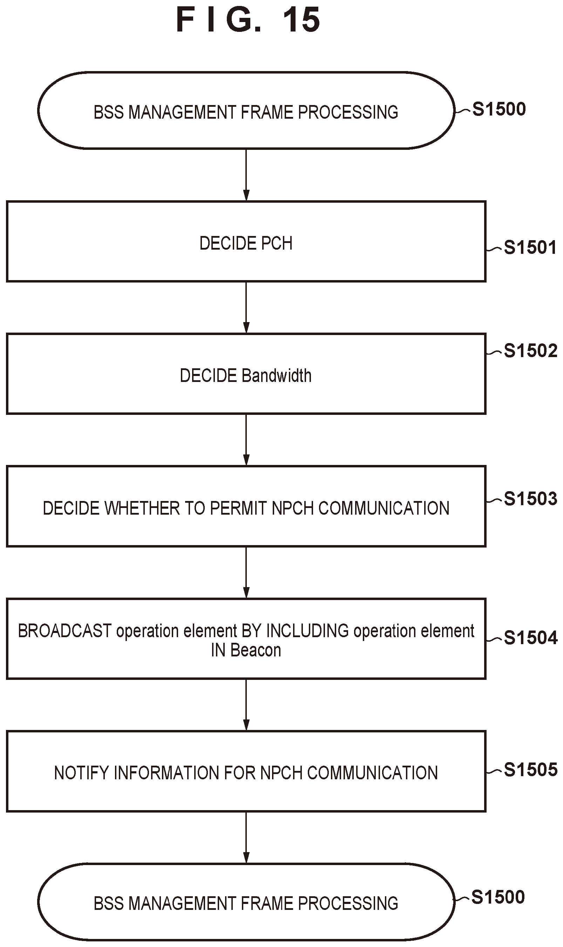

Fig. 15 is a flowchart showing an example of channel operational setting processing of the BSS executed by the AP 101. In step S1500, the AP 101 starts BSS management frame processing. BSS management frame processing is executed at, for example, a predetermined time interval. In the processing shown in Fig. 15, the AP 101 decides conditions associated with the Operation such as the use channel and bandwidth of the BSS and broadcasts the information in the BSS using a Management frame such as a Beacon or Action frame.

In step S1501, the AP 101 decides the PCH. In step S1502, the AP 101 decides a Bandwidth to be used in communication. Note that these decisions can be made in accordance with settings done by the manager of the AP 101 or set values held in the storage unit 201.

In step S1503, the AP 101 decides whether to permit NPCH communication in the BSS. In step S1504, the AP 101 constructs an Operational element and broadcasts it by a Beacon. By a Beacon signal, the AP 101 can notify, to a non access point terminal (non AP STA), whether to permit NPCH.

In step S1505, the AP 101 notifies information for NPCH communication. This information notification may be broadcast by including the information in an element 505 of the Beacon or may be done using a newly defined Action Frame.

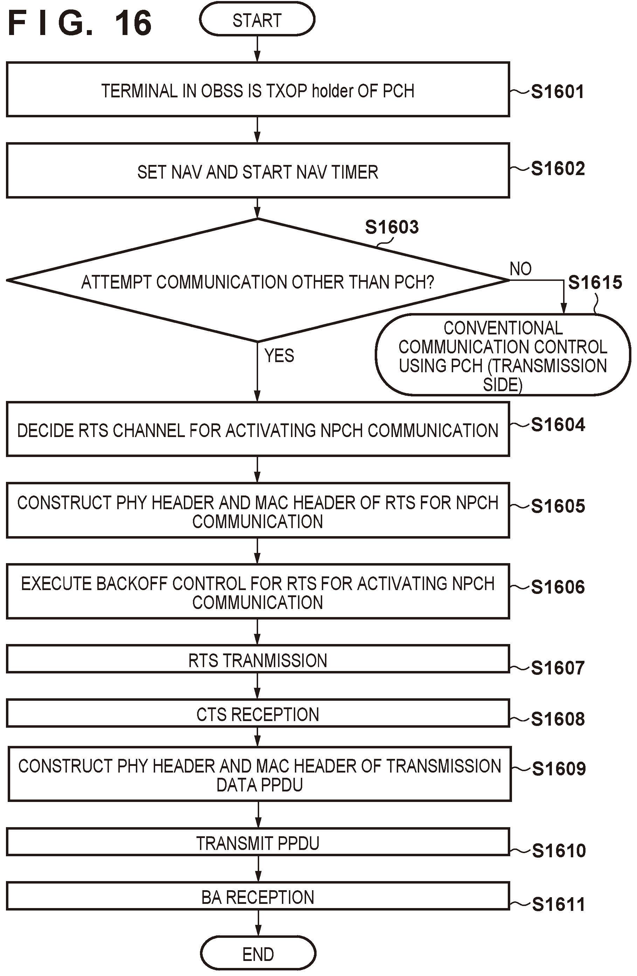

Fig. 16 is a flowchart showing an example of processing executed by the wireless communication apparatus on the transmission side. That is, the flowchart of Fig. 16 is common to APs and STAs. The processing shown in Fig. 16 is executed if transmission data is generated (step S1600).

In step S1601, the wireless communication apparatus detects that a terminal in the OBSS is the TXOP holder of the primary channel. For example, upon detecting, on the primary channel, an RTS signal from a terminal in the OBSS, it can be determined that the terminal in the OBSS is the TXOP holder of the primary channel.

In step S1602, the wireless communication apparatus sets an NAV for the BSS and starts the NAV timer. Note that in this embodiment, Spatial Reuse introduced in the IEEE 802.11ax is not operated. Hence, control by two types of NAV (basic NAV and intra-BSS NAV) is not executed, and the NAV set in step S1602 is synonymous with basic NAV.

In step S1603, the wireless communication apparatus decides whether to attempt NPCH communication. In step S1603, for example, in a case where the PCH is busy, it can be determined to attempt NPCH communication. In another example, in step S1603, in a case where an RTS from the OBSS is detected, it can be determined to attempt NPCH communication. To attempt NPCH communication (YES in step S1603), the wireless communication apparatus advances the process to step S1604 to decide the channel on which to transmit the RTS for activating NPCH communication. This processing corresponds to 1410 in the sequence. On the other hand, upon deciding not to attempt NPCH communication (NO in step S1603), the wireless communication apparatus advances the process to step S1615 to perform conventional communication control using a PCH.

In step S1605, the wireless communication apparatus constructs the preamble and MAC frame of the RTS for NPCH communication. This preamble reflects TXVECTOR notified from the MAC layer to the PHY layer. More specifically, the preamble is formed by setting "1" to bit 3 in 4 bits corresponding to CH_BANDWIDTH_IN_NON_HT. Also, Duration of the RTS in NPCH communication is shorter than the NAV period by the OBSS. This is because NPCH communication is defined as communication permitted only during the NAV setting period by the OBSS.

In step S1606, the wireless communication apparatus executes backoff control to transmit an RTS that requests ensuring of TXOP of NPCH communication and determines whether one channel of NPCHs is idle until the backoff counter becomes zero. If the backoff counter becomes zero while one channel of NPCHs is kept in the idle state, the wireless communication apparatus transmits the RTS using the channel (step S1608). Simultaneously, the RTS is transmitted even by NPCHs that are idle during the priority interframe space (PIFS) before the backoff counter becomes zero. Here, the NPCH on which to transmit the RTS is designated by Channel Width notified by the Operation element.

Next, the wireless communication apparatus receives a CTS that is a response to the RTS transmitted in step S1608 (step S1608). Note that as described above, the partner-side wireless communication apparatus that has received the RTS transmits the CTS only on the channel in the idle state. For this reason, the wireless communication apparatus receives the CTS (step S1608) in the NPCHs on which the RTS has been transmitted and identifies the channel on which the CTS has been received. The wireless communication apparatus creates Punctured Channel Information that disables each channel on which the CTS has not been received and constructs a PHY header for transmission data (step S1609). Note that in Draft4.1 of the IEEE 802.11be standard, the number of bits provided in U-SIG of the PHY header to transmit the Punctured Channel Information is 5. In the 5-bit region, it may be impossible to express a pattern in which an arbitrary 20-MHz channel in 320 MHz is Punctured. In this case, a puncturing pattern in which the communication of the channel on which the CTS has been received is enabled as much as possible is selected. Also, the PPDU format can be extended to indicate more flexible puncturing. In this case, the PPDU used for data communication is set as a PPDU for Ultra High Reliability (UHR), and a 16-bit field for transmitting puncturing is newly defined in UHR-SIG that is the PHY header unique to UHR. It suffices that the 16-bit field is a bitmap region indicating, for each 20-MHz sub-band, whether the sub-band is enabled or disabled.

Subsequently, the wireless communication apparatus transmits a PPDU including the constructed PHY header to the partner-side wireless communication apparatus (step S1610). As described above, the channel on which to transmit the PPDU is the channel on which the CTS has been received in the NPCHs. After transmission of the PPDU, the wireless communication apparatus receives BlockAck (BA) (step S1611) and ends the NPCH communication (step S1612). The PPDU transmitted in step S1610 is, for example, a UHR PPDU of the IEEE 802.11bn standard. Note that the PPDU may be an EHT (Extremely High Throughput) PPDU of the IEEE 802.11be standard.

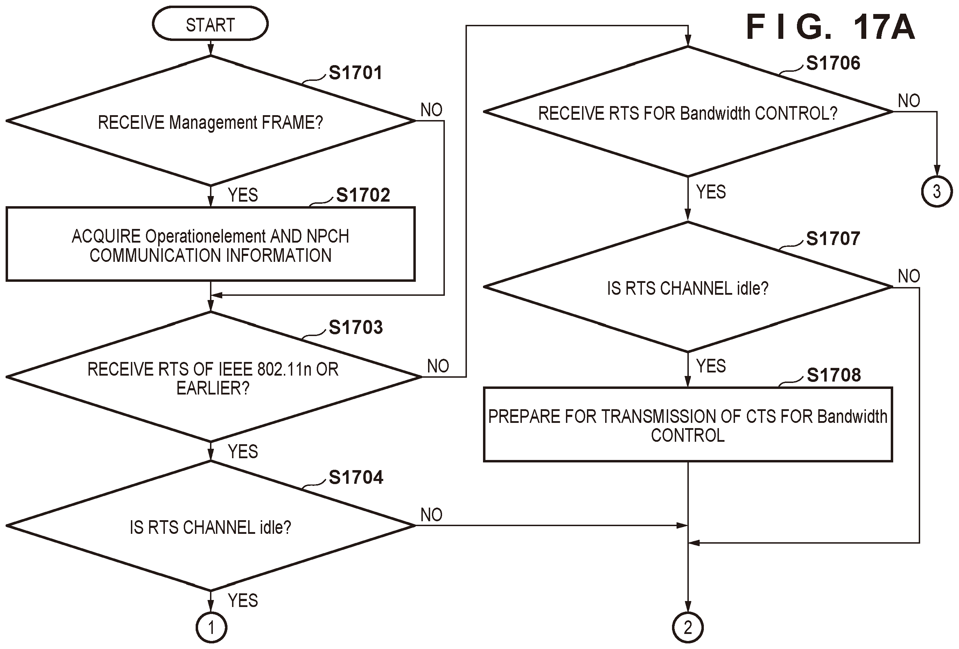

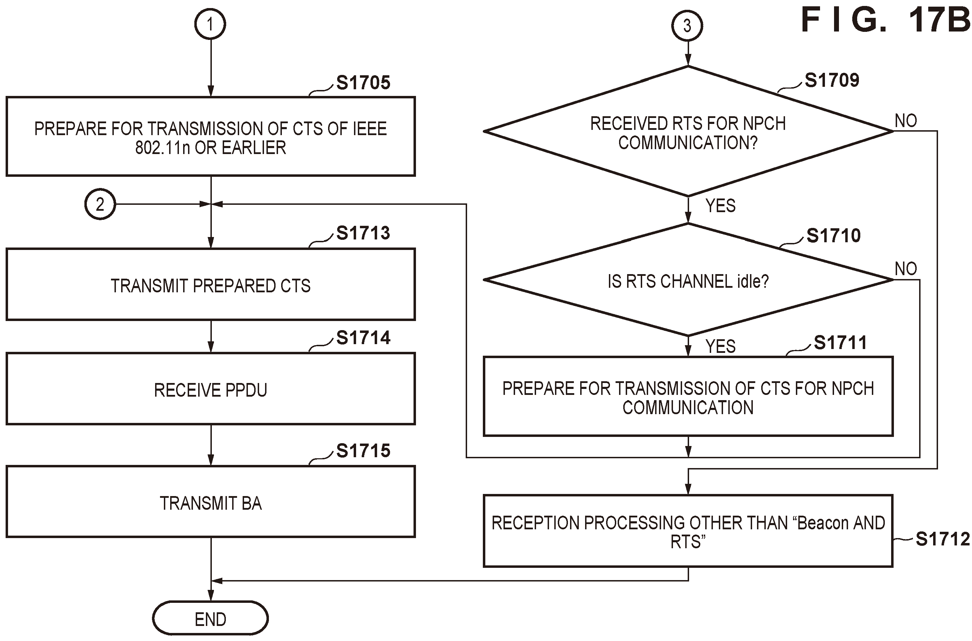

Figs. 17A and 17B are flowcharts showing an example of processing executed by a non AP STA that operates as the wireless communication apparatus on the reception side. The following processing is implemented by the control unit 202 of the non AP STA executing a program stored in the storage unit 201.

The control unit 202 waits for a signal from another wireless communication apparatus at a predetermined timing. If the non AP STA receives a Management frame including a Beacon or Action frame (YES in step S1701), the control unit 202 advances the process to step S1702, and if no Management frame is received (NO in step S1701), the control unit 202 advances the process to step S1703.

In step S1702, the control unit 202 acquires operation elements included in the Beacon or Action frame. The acquisition target elements are the information elements described with reference to Figs. 6A to 9 and 18. In step S1703, the control unit 202 determines whether an RTS complying with the standard up to the IEEE 802.11n standard is received. Upon determining that an RTS complying with the standard up to the IEEE 802.11n standard is received (YES in step S1703), the control unit 202 confirms whether the channel on which the RTS is received is in the idle state (step S1704). Upon determining that the channel on which the RTS is received is in the idle state (YES in step S1704), the control unit 202 advances the process to step S1705. Upon determining that the channel is not in the idle state (NO in step S1704), the control unit 202 advances the process to step S1713. In step S1705, the control unit 202 prepares for transmission of a CTS complying with the standard up to the IEEE 802.11n standard using the channel on which the RTS is received.

In step S1706, the control unit 202 determines whether an RTS for conventional Bandwidth signaling is received. Here, "conventional" means "up to 802.11be Draft4.1". That is, in step S1706, it is determined whether it is an RTS that requests ensuring of TXOP in one or more channels including the primary channel. Upon determining that an RTS for Bandwidth signaling is received (YES in step S1706), the control unit 202 advances the process to step S1707. Upon determining that an RTS for Bandwidth signaling is not received (NO in step S1706), the control unit 202 advances the process to step S1709.

In step S1707, the control unit 202 determines whether the channel on which the RTS is received is in the idle state. Upon determining that the channel on which the RTS is received is in the idle state (YES in step S1707), the control unit 202 advances the process to step S1708. Upon determining that the channel is not in the idle state, the control unit 202 advances the process to step S1713.

In step S1708, the control unit 202 prepares for transmission of a CTS to the RTS for conventional bandwidth signaling using the channel on which the RTS is received.

In step S1709, the control unit 202 determines whether an RTS for NPCH communication is received. This determination is done based on RXVECTOR notified from the PHY layer to the MAC layer. More specifically, it is determined whether bit 3 in 4 bits corresponding to CH_BANDWIDTH_IN_NON_HT_INDICATOR is set to "1". Note that in this embodiment, the RTS for NPCH communication is not transmitted on the PCH. Upon determining that the RTS for NPCH communication is received (YES in step S1709), the control unit 202 advances the process to step S1710. Upon determining that the RTS for NPCH communication is not received (NO in step S1709), the control unit 202 advances the process to step S1712.

In step S1710, the control unit 202 determines whether the channel on which the RTS for NPCH communication is received is in the idle state. Upon determining that the channel on which the RTS for NPCH communication is received is in the idle state (YES in step S1710), the control unit 202 advances the process to step S1711. Upon determining that the channel is not in the idle state (NO in step S1710), the control unit 202 advances the process to step S1713. Note that upon determining, in step S1710, that at least one channel of a plurality of channels is in the idle state, the control unit 202 advances the process to step S1711. In step S1711, the control unit 202 prepares for transmission of a CTS for NPCH communication using the channel on which the RTS is received.

In step S1712, the control unit 202 executes reception processing of a frame other than a Beacon or RTS.

In step S1713, the control unit 202 transmits the CTS prepared in step S1705, S1708, or S1711 using each 20-MHz channel. For example, here, if no CTS is prepared, the control unit 202 may not transmit a CTS. In step S1714, the control unit 202 receives a PPDU on the channel on which the CTS is transmitted. Note that, depending on the return state of the CTS, a PPDU without PHY header is received using one or more channels. The absence of the PHY header can be recognized by the control unit 202 analyzing the Punctured Channel Information of the PHY header. If reception of the PPDU is normally completed, the control unit 202 transmits a BA (step S1715) and returns the process to step S1701. Note that in Figs. 17A and 17B, if the wireless communication apparatus on the reception side is an AP, in place of the processes of steps S1701 and S1702, the AP decides the Operation elements and transmits a Beacon including these.

Note that in steps S1703 and S1706, it is determined that an RTS is received on condition that the RTS is received on the PCH. For this reason, if the RTS of the conventional standard is received and the RTS is not received on the PCH, it may be determined as an error. On the other hand, in step S1709, the wireless communication apparatus on the reception side can recognize that the RTS is not transmitted on the PCH. Hence, in step S1709, the control unit 202 advances the process to step S1710 on condition that the RTS for NPCH communication is received using one or more channels other than the PCH.

As described above, the RTS for NPCH communication is discriminated from the conventional RTS. Even if the RTS of the PCH is not detected upon determining that the PCH is idle on the reception side, it is never determined as an error, resulting in an effect of stabilizing communication. Also, since the time length of the control frame is not increased, the medium utilization efficiency increases.

### <Example 2>

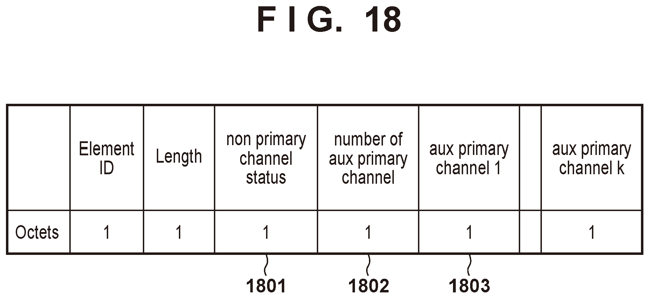

Example 1 is an example in which the transmission side and the reception side can transmit/receive an RTS/CTS using a 20-MHz channel adjacent to the primary channel. Example 2 is an example in which the concept of 40-MHz bonding of the IEEE 802.11n or the concept of wider channel from the IEEE 802.11ac onward is not used. In this case, the wireless communication apparatus needs to perform communication of the 20-MHz bandwidth using an arbitrary channel irrespective of the PCH. For this reason, the transmission side and the reception side need to recognize the channel to be used by information other than the operation element information of HT/VHT/HE/EHT. For this recognition, a Non Primary operation element shown in Fig. 18 is used.

Non Primary Channel status 1801 is an 8-bit field, and each bit in the field has a meaning, as will be described below.

Bit 0 that is set to 1 indicates that NPCH communication is permitted. Bit 1 that is set to 1 indicates that a control frame of NPCH communication is shared as a control frame of Bandwidth signaling. Bit 2 that is set to 1 indicates that the control frame of Bandwidth signaling is not used to control NPCH communication. Bits from bit 3 are unused (Reserved).

number of aux primary channel 1802 is 1-octet field indicating the number of arbitrary channels.

aux primary channel 1803 stores information concerning a non-primary channel. The non-primary operation element includes the aux primary channels 1803 in number designated by the number of aux primary channel 1802. Note that if the number of aux primary channel 1802 is 0 (zero), there does not exist NPCH to be used for NPCH communication in the BSS, that is, NPCH communication is not executed.

Also, in the sequence shown in Fig. 14, if the STA 103 on the reception side does not detect the RTS 1406, the STA 103 on the reception side may not be set in a state of waiting for an RTS on an arbitrary channel. As described above, since the channel for activating NPCH communication can be controlled in accordance with the characteristic on the reception side, the use convenience improves.

### <Modifications>

In the above-described embodiment, a case where information possible to identify an RTS for NPCH communication is stored in an RTS transmitted using a secondary channel to perform NPCH communication has been exemplified. However, the present invention is not limited to this. If an AP is going to start NPCH communication, information possible to identify NPCH communication may be stored in an MU-RTS Trigger frame. In this case as well, the information possible to identify NPCH communication is stored in the PHY header portion of the frame. The information possible to identify NPCH communication may be stored in another frame. The other frame is, for example, a frame that triggers communication between apparatuses. More specifically, if an AP starts NPCH communication, the information possible to identify NPCH communication may be stored in a BSRP (Buffer Status Report Poll) Trigger frame. In this case as well, the information possible to identify NPCH communication is stored in the PHY header portion of the frame.

### <Other Embodiments>

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

Also, the disclosure of the embodiment includes the following wireless communication apparatus, a control method thereof, and a program.

The present invention is not limited to the above embodiments and various changes and modifications can be made within the spirit and scope of the present invention. Therefore, to apprise the public of the scope of the present invention, the following claims are made.

This application claims the benefit of Japanese Patent Application No. 2024-006209, filed January 18, 2024 which is hereby incorporated by reference herein in its entirety.

### REFERENCE SIGNS LIST

101: AP, 103: STA, 104: AP, 402: Header, 403: PSDU, 411: SERVICE, 412: Frame Control, 413: Duration/ID, 414: Address1, 415: Address2, 501: HT Operation, 502: VHT Operation, 503: HE Operation, 504: EHT Operation, 505: Non Primary Operation, 1005, 1006: TXVECTOR, 1007: RXVECTOR, 1301: Value in bits 3 of CH_BANDWIDTH_IN_NON_HT

## Claims

1. A wireless communication apparatus complying with an IEEE 802.11 standard series, **characterized by** comprising:
determination means for determining whether a primary channel of a Basic Service Set (BSS) to which the wireless communication apparatus belongs is in a busy state;
transmission means for, in a case where the determination means determines that the primary channel is in the busy state, transmitting, in not less than one channel different from the primary channel, an occupancy request frame that requests ensuring of a transmission opportunity (TXOP) in the channel; and
communication control means for executing predetermined communication, in which data is transmitted without using the primary channel, in accordance with a response to the occupancy request frame,
wherein the occupancy request frame includes predetermined information possible to identify that ensuring of the TXOP for the predetermined communication is requested.

2. The wireless communication apparatus according to claim 1, **characterized in that** the predetermined information is stored in a service field included in a physical layer (PHY) header of the occupancy request frame.

3. The wireless communication apparatus according to claim 1 or 2, **characterized by** further comprising detection means for detecting the response to the occupancy request frame transmitted by the transmission means,
wherein the communication control means transmits a physical layer protocol data unit (PPDU) in the channel on which the response has been received among the not less than one channel in which the occupancy request frame requests ensuring of the TXOP.

4. The wireless communication apparatus according to claim 3, **characterized in that** the transmission means transmits a plurality of occupancy request frames in a plurality of channels different from the primary channel, and
the communication control means controls such that the PPDU is not transmitted in a channel on which the response is not detected by the detection means among the plurality of channels on which the plurality of occupancy request frames are transmitted by the transmission means.

5. The wireless communication apparatus according to claim 4, **characterized in that** the physical layer (PHY) header of the PPDU includes information possible to identify a channel on which the PPDU is not transmitted.

6. The wireless communication apparatus according to claim 4 or 5, **characterized in that** the transmission means executes backoff control on one channel of the plurality of channels before the occupancy request frame is transmitted on the plurality of channels and, on a channel that is not the one channel of the plurality of channels, transmits the occupancy request frame on a channel that is in an idle state during a priority interframe space (PIFS) before a backoff counter becomes zero.

7. The wireless communication apparatus according to any one of claims 1 to 6, **characterized in that** the wireless communication apparatus is an access point that manages the BSS, and
the wireless communication apparatus further comprises second transmission means for transmitting a parameter to be used for the predetermined communication, the parameter being included in an operation element.

8. The wireless communication apparatus according to claim 7, **characterized in that** the operation element includes information indicating whether to control a bandwidth in the occupancy request frame.

9. The wireless communication apparatus according to claim 7 or 8, **characterized in that** the operation element includes information indicating a channel on which the occupancy request frame can be transmitted.

10. A wireless communication apparatus complying with an IEEE 802.11 standard series, **characterized by** comprising:
reception means for receiving, in not less than one channel different from a primary channel of a Basic Service Set (BSS) to which the wireless communication apparatus belongs, an occupancy request frame that requests ensuring of a transmission opportunity (TXOP) on the channel;
determination means for, in a case where the occupancy request frame includes predetermined information possible to identify that ensuring of the TXOP for the predetermined communication for transmitting data without using the primary channel is requested, determining whether the not less than one channel is in an idle state with respect to the occupancy request frame received by the reception means;
transmission means for transmitting an occupancy response frame on a channel determined to be in the idle state by the determination means among the not less than one channel; and
communication control means for executing the predetermined communication in accordance with the occupancy response frame.

11. The wireless communication apparatus according to claim 10, **characterized in that** the predetermined information is stored in a service field included in a physical layer (PHY) header of the occupancy request frame.

12. The wireless communication apparatus according to claim 10 or 11, **characterized in that** the reception means detects a plurality of occupancy request frames on a plurality of channels different from the primary channel, and
the transmission means controls such that the occupancy response frame is not transmitted on a channel determined to be in a busy state by the determination means among the plurality of channels in which the plurality of occupancy request frames are received by the reception means.

13. The wireless communication apparatus according to any one of claims 10 to 12, **characterized in that** the wireless communication apparatus is a non access point terminal (Non AP STA) belonging to the BSS, and
the reception means decides a channel to detect the occupancy request frame based on an operation element received from an access point.

14. The wireless communication apparatus according to claim 13, **characterized in that** the operation element includes information indicating whether to control a bandwidth in the occupancy request frame.

15. The wireless communication apparatus according to any one of claims 10 to 14, **characterized in that** the transmission means does not transmit the occupancy response frame to the occupancy request frame in a case where the reception means does not receive the occupancy request frame on the primary channel and the occupancy request frame received on a channel that is not the primary channel does not include the predetermined information possible to identify that ensuring of the TXOP for the predetermined communication is requested.

16. A control method executed by a wireless communication apparatus complying with an IEEE 802.11 standard series, **characterized by** comprising:
determining whether a primary channel of a Basic Service Set (BSS) to which the wireless communication apparatus belongs is in a busy state;
in a case where it is determined that the primary channel is in the busy state, transmitting, in not less than one channel different from the primary channel, an occupancy request frame that requests ensuring of a transmission opportunity (TXOP) on the channel; and
executing predetermined communication, in which data is transmitted without using the primary channel, in accordance with a response to the occupancy request frame,
wherein the occupancy request frame includes predetermined information possible to identify that ensuring of the TXOP for the predetermined communication is requested.

17. A control method executed by a wireless communication apparatus complying with an IEEE 802.11 standard series, **characterized by** comprising:
receiving, in not less than one channel different from a primary channel of a Basic Service Set (BSS) to which the wireless communication apparatus belongs, an occupancy request frame that requests ensuring of a transmission opportunity (TXOP) on the channel;
in a case where the occupancy request frame includes predetermined information possible to identify that ensuring of the TXOP for the predetermined communication for transmitting data without using the primary channel is requested, determining whether the not less than one channel is in an idle state with respect to the received occupancy request frame;
transmitting an occupancy response frame on a channel determined to be in the idle state among the not less than one channel; and
executing the predetermined communication in which data is transmitted without using the primary channel in accordance with the occupancy response frame.

18. A program configured to cause a computer to function as a wireless communication apparatus defined in any one of claims 1 to 15.
